Europäisches Patentamt

European Patent Office

Office européen des brevets

(11) Veröffentlichungsnummer: **0 202 191**

**A2**

(12) # EUROPÄISCHE PATENTANMELDUNG

(21) Anmeldenummer: **86730072.5**

(22) Anmeldetag: **02.05.86**

(51) Int. Cl.4: **H04Q 11/04** , H04M 11/06 , H04L 11/16

(30) Priorität: **09.05.85 DE 3517006**

(43) Veröffentlichungstag der Anmeldung:
**20.11.86 Patentblatt 86/47**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Eberspächer, Jörg, Dr.-Ing.**
**Weissensteinstrasse 15**
**D-8000 München 60(DE)**

(54) **Schaltungsanordnung für ein Kommunikationssystem zur Übertragung von Nachrichteninformationen von Schmal- und Breitband-Endgeräten innerhalb ringförmig strukturierter lokaler Netzwerke.**

(57) Die Erfindung betrifft eine Schaltungsanordnung für ein Kommunikationssystem zur Übertragung von bitseriellen Nachrichteninformationen, insbesondere von innerhalb optischer Übertragungssysteme übertragener Multiplexdaten, über ringförmig konfigurierte, mit entsprechenden Koppeleinrichtungen ausgestattete, lokale Netzwerke, an die eine an die unterschiedlichen Kommunikationsarten im Hinblick auf die Datenübertragungsmenge und Datenübertragungsgeschwindigkeit innerhalb eines Rahmens, sowie hinsichtlich des Übertragungsverfahrens angepaßte Anzahl von unterschiedliche Kommunikationsarten verarbeitende Endgeräte in beliebiger Kombination zueinander anschließbar sind.

Das ringförmig konfigurierte Netzwerk ist unter Berücksichtigung der maximal über einen Rahmen innerhalb einer bestimmten Zeit zu übertragenen Datenmenge in ringförmige Teilnetzwerke (LO1 bis LON) derart unterteilt, daß innerhalb eines jeden ringförmigen Teilnetzwerkes (LO1 bis LON) mindestens ein Breitbandteilnehmer-Endgerät (HS...) und eine sich bis zur maximalen Datenmenge ergänzende Anzahl von Schmalbandteilnehmer-Endgeräten (MS...) enthalten sind, wobei die Daten der Breitbandteilnehmer-Endgeräte (HS...) durch eine Teilring-Schnittstelleneinrichtung (RIU) ausgeblendet und über eine zentral gesteuerte Breitband-Raumkoppelfeldeinrichtung (BBK) zentral vermittelt und wieder in das entsprechende Teilnetzwerk (LO1 bis LON) eingeblendet werden.

## Schaltungsanordnung für ein Kommunikationssystem zur Übertragung von Nachrichteninformationen von Schmal- und Breitband-Endgeräten innerhalb ringförmig strukturierter lokaler Netzwerke.

Die Erfindung betrifft eine Schaltungsanordnung für ein Kommunikationssystem zur Übertragung von bitseriellen Nachrichteninformationen, insbesondere von innerhalb optischer Übertragungssysteme übertragener Multiplexdaten, über ringförmig konfigurierte, mit entsprechenden Koppeleinrichtungen ausgestattete, lokale Netzwerke, an die eine an die unterschiedlichen Kommunikationsarten im Hinblick auf die Datenübertragungsmenge und Datenübertragungsgeschwindigkeit innerhalb eines Rahmens sowie hinsichtlich des Übertragungsverfahrens angepaßte Anzahl von unterschiedliche Kommunikationsarten verarbeitende Endgeräte in beliebiger Kombination zueinander anschließbar sind.

Ein derartiges Kommunikationssystem ist aus der DE-OS 33 04 823 bekannt, in dem an ein ringförmig konfiguriertes Lichtwellenleiternetz unterschiedliche Teilnehmer-Endgeräte angeschlossen sind, die Nachrichten miteinander austauschen können. Der Austausch der Nachrichten erfolgt hierbei ohne Einschaltung einer zentral angeordneten Vermittlungssteuerung und kann wahlweise mit Hilfe eines kontinuierlichen Übertragungsverfahrens und/oder eines Paketverfahrens erfolgen. Zur gezielten Übertragung der Daten zwischen den Endgeräten wird das sogenannte Hybridverfahren eingesetzt, in dem innerhalb des ringförmig konfigurierten Netzwerkes ein synchron umlaufender Pulsrahmen in zwei Unterrahmen -dem sogenannten Stream-Rahmen und Burst-Rahmen -aufgeteilt ist. Dabei besteht der erste dieser Unterrahmen aus (m -l) Zeitschlitzen (Zeitkanälen), und dient zur Übertragung kontinuierlicher Signale, wie z. B. digitalisierter Sprache, mit Datenraten von beispielsweise 64 k Bit/s je Zeitschlitz. Der zweite Unterrahmen ist nicht unterteilt und kann beispielsweise mit einer Datenrate von 4,096 M Bit/s betrieben werden. Der zweite Unterrahmen dient einerseits für die Signalisierung der Kanäle des ersten Unterrahmens, z. B. zum Verbindungsaufbau und Verbindungsabbau und außerdem zum schnellen Datenaustausch zwischen modernen Bürogeräten, die stoßartig zu bestimmten Zeiten größere Datenmengen senden bzw. empfangen müssen. Dieser zweite Unterrahmen wird nach dem sogenannten Token-Verfahren betrieben.

Da das Hybridverfahren vom Prinzip her in der Datenrate nicht beschränkt ist, kann auch in einem derartigen Ringnetzwerk mit einer weit höheren Datenrate als beispielsweise 8 M Bit/s gearbeitet werden.

Unter der Voraussetzung, daß in zukünftigen "integrierten" Kommunikationsnetzen auch Bewegtbild-Kommunikation, also Bildtelefon, Bildüberwachung, Bildkonferenz usw., zu übertragen ist, müssen die Bildinformationen, wie die anderen Sprach-und Dateninformationen, digitalisiert werden.

Zur Verbindung der einzelnen Breitband-Endgeräte ist es bekannt, diese an eine zental angeordnete Breitband-Koppelfeldeinrichtung anzuschließen und die entsprechenden Leitungswege über das Koppelfeld für die Zeitdauer der Übertragung durchzuschalten. Zu jedem derartigen Breitband-Teilnehmer führt damit ein individuelles Leitungsbündel mit beispielsweise einem Bildkanal zuzüglich einiger Schmalbandkanäle, die ebenfalls über die Zentrale vermittelt werden. Unter der Annahme, daß für den Breitbandkanal eine Datenrate von 34 M Bit/s und für die Schmalbandkanäle weitere 4 M Bit/s zugrunde gelegt werden können, ergibt sich auf der Hin-bzw. Rückleitung des Kommunikationssystems eine Datenrate von ca. 38 M Bit/s. Da sowohl die Breitband-als auch die Schmalband-Verbindungen über das zentral gesteuerte Vermittlungssystem durchgeschaltet werden müssen, kann wegen der fehlenden Bus-Struktur innerhalb eines solchen Kommunikationssystems trotz der vorhandenen hohen Datenraten keine schnelle Datenkommunikation erreicht werden, da die Zeiten für den Verbindungsauf-bzw -abbau wegen der Zentralisierung zu hoch sind.

Wenn man andererseits nach dem bekannten Verfahren (Hybridverfahren) auf einer einzigen ringförmigen Leitung gleichzeitig über mehrere Breitbandkanäle mit Datenraten von 34 M Bit/s je Kanal Daten übertragen will, so ergibt sich hier eine Summendatenrate von k x 34 M Bit/s, also für k = 10 Kanäle bereits 340 M Bit/s zuzüglich der Datenrate des Schmalbandkanals (Burst-Unterkanal) von beispielsweise 4 M Bit/s.

Derartige Datenraten sind jedoch heute sowie auch in der näheren Zukunft mit den derzeit verfügbaren optischen und elektronischen Schaltkomponenten nicht wirtschaftlich zu bewältigen.

Da jedoch, wie bereits erwähnt, in künftigen Kommunikationssystemen neben der Datenübertragung für Sprache, Text etc. auch die Bewegtbild-Kommunikationen möglich sein soll, besteht die der Erfindung zugrunde liegende Aufgabe darin, eine Schaltungsanordnung anzugeben, bei der es unter wirtschaftlichen Gesichtspunkten möglich ist, unter weitestgehender Beibehaltung des bekannten Hybrid-Verfahrens und dem Einsatz von derzeit verfügbaren optischen und elektronischen Schaltkomponenten innerhalb der eingangs definierten Kommunikationssysteme zusätzlich die Daten für die Bewegtbildkommunikation zu übertragen. Erfindungsgemäß wird dies durch die Kombination der Merkmale 1.1 bis 1.4 erreicht.

Mit der Aufteilung des ringförmig konfigurierten Netzwerkes in einzelne Teilnetzwerke, in denen je ein Breitband-Teilnehmer-Endgerät und eine bestimmte Anzahl von Schmalbandteilnehmer-Endgeräten enthalten sind, kann mit dem Einsatz der Teilring-Schnittstelleneinrichtung die Nachrichteninformationsübertragung zwischen den entsprechenden Endgeräten ungeachtet der jeweils benötigten Datenübertragungsrate erfolgen. Dabei werden die Daten der Schmalbandteilnehmer-Endgeräte innerhalb der dezentral gesteuerten Ringstruktur übertragen, wärend die Daten der Breitbandteilnehmer-Endgeräte mit Hilfe der Teilring-Schnittstelleneinrichtung aus diesem Ringverbund ausgeblendet und über die zentral gesteuerte Breitband-Raumkoppelfeld-Einrichtung geführt werden. Innerhalb der Teilring-Schnittstelleneinrichtung befindet sich erfindungsgemäß neben der Rahmenausgleichseinheit die Multiplexeinrichtung, zu der neben den Daten der Schmalbandteilnehmer-Endgeräte aus den Teilnetzwerken die ausgeblendeten Daten der Breitbandteilnehmer-Endgeräte von der Breitband-Raumkoppelfeldeinrichtung wieder zugeführt werden. Als erfindungswesentlich ist also die Kombination der dezentralgesteuerten Ringstruktur für die Daten der Schmalbandteilnehmer-Endgeräte mit einer zentral gesteuerten Vermittlung der Daten für die Breitbandteilnehmer-Endgeräte über die Breitband-Raumkoppelfeldeinrichtung anzusehen. Das ringförmig konfigurierte Netzwerk, das also in sternförmig verlegte Teilnetzwerke unterteilt ist, wird für die Schmalbandteilnehmer-Endgeräte im autonomen und dezentralgesteuerten Ring betrieben, in dem die Schmalbandteilnehmer-Endgeräte entsprechend der zu übertragenden Datenmenge mit Hilfe des Token-Kanals entweder einen entsprechenden Schlitz zugeteilt bekommen oder sich direkt des Token-Kanals bedienen, um paketartige Nachrichteninformationen austauschen zu können. Die Breitbandteilnehmer-Endgeräte werden dagegen in bekannter Weise über die Breitband-Raumkoppelfeldeinrichtung zentral vermittelt. Diese Vermittlung wird mit Hilfe der zentralen Steuerung der Breitband-Raumkoppelfeldeinrichtung ermöglicht, die unmittelbar Zugriff zu einer zentralen Schmalbandstation hat, die in einem der Teilnetzwerke untergebracht ist. Die Verbindungswünsche und die Signalisierungen werden in bekannter Weise über den Token-Kanal des Hybrid-Ringes geleitet und die Durchschaltung der Verbindung zwischen den Breitbandteilnehmern über die Breitband-Raumkoppelfeldeinrichtung hergestellt.

Gemäß einer vorteilhaften Ausgestaltung der Erfindung ist vorgesehen, die Teilring-Schnittstelleneinrichtung mit einer Verzweigungseinrichtung auszustatten, in der die Multiplexdaten leitungsgruppenindividuell -Daten der Breitbandteilnehmer-Endgeräte zur Breitband-Raumkoppelfeldeinrichtung und Daten der Schmalbandteilnehmer-Endgeräte zur entsprechenden Teilring-Schnittstelleneinrichtung -ausblendbar sind. Damit ist erreicht, daß die Breitband-Raumkoppelfeldeinrichtung und die jeweiligen Teilnetzwerke keine zusätzliche Bewertung der Daten vorzunehmen haben, bzw. daß die im Rahmen gemeinsam übertragenen, für den jeweiligen Übertragungsweg relevanten Daten direkt zur weiteren Bearbeitung vorliegen.

Eine weitere vorteilhafte Ausgestaltung der Erfindung ist durch die Merkmalskombination 3.1 bis 3.2 gegeben. Hierbei werden die Daten der Breitbandteilnehmer-Endgeräte und der Schmalbandteilnehmer-Endgeräte nicht nur voneinander getrennt, sondern auch bezüglich ihrer Datenraten so herunter transformiert, daß beispielsweise auf der ersten Leitung zur Breitband-Raumkoppelfeldeinrichtung nicht die Gesamtdatenrate sondern lediglich nur der Anteil der für die Breitbandteilnehmer-Endgeräte notwendigen Daten zu übertragen ist. Die Breitband-Raumkoppelfeldeinrichtung kann dadurch in technologisch günstiger Weise, vor allem preisgünstiger, hergestellt werden.

Die Erfindung wird in einem figürlich dargestellten Ausführungsbeispiel näher erläutert, wobei die Figur 1 das Prinzip der Erfindung verdeutlicht, die Figur 2 eine vorteilhafte Ausgestaltung der Erfindung im Detail zeigt, die Figuren 3 und 4 Einzelheiten der Rahmenstruktur für die kombinierten Übertragungswege und die entsprechenden Datenverläufe auf den Leitungsabschnitten erkennen lassen und die Figur 5 ein Blockschaltbild einer Teilnehmerstation mit den Breitband-und Schmalband-Endgeräten angibt.

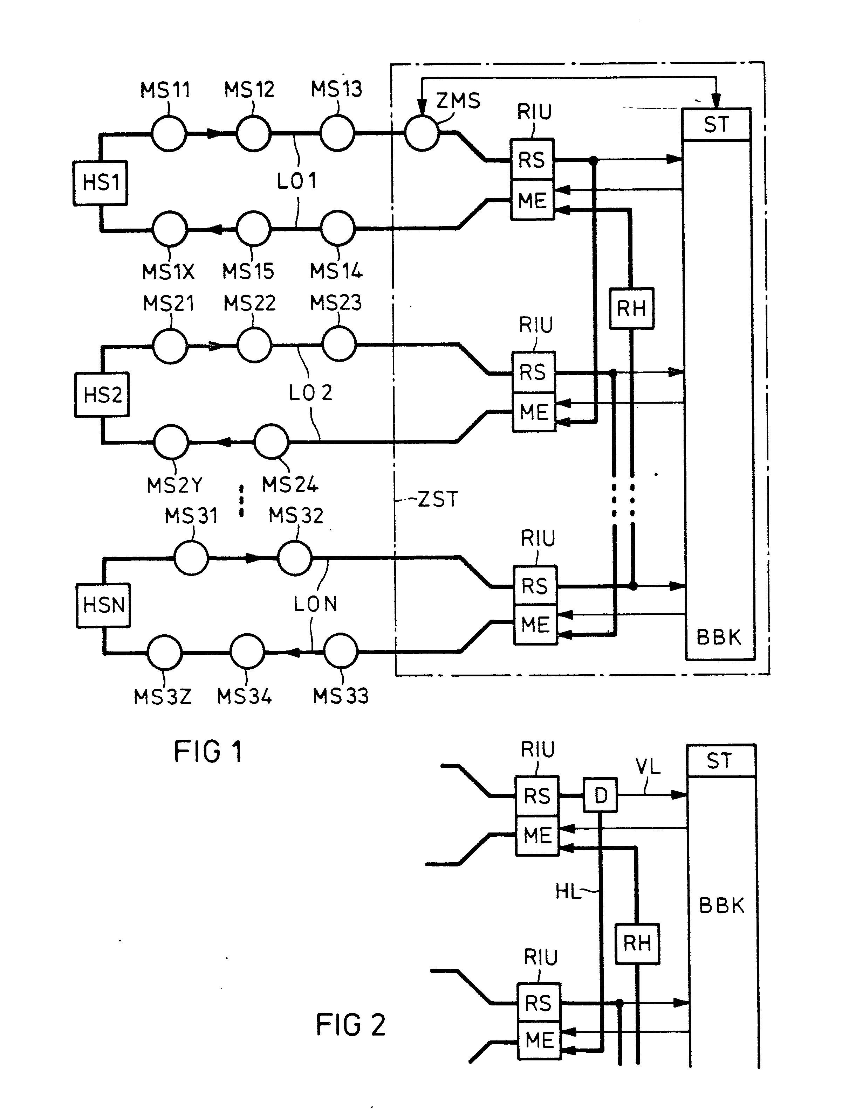

In dem in Figur 1 dargestellten Kommunikationssystem ist das ringförmig konfigurierte lokale Netzwerk in die Teilnetzwerke LO1 bis LON aufgeteilt, wobei jedes dieser Teilnetzwerke LO1 bis LON mit der Teilring-Schnittstelleneinrichtung RIU abgeschlossen ist. Innerhalb dieser Teilnetzwerke LO1 bis LON befinden sich jeweils ein Breitbandteilnehmer-Endgerät HS und eine sich bis zur maximal übertragbaren Datenmenge ergänzende Anzahl von Schmalbandteilnehmer-Endgeräten MS.... Außerdem enthält eines der Teil-

netzwerke LO1 bis LON die zentrale Schmalbandstation ZMS, die von der Steuereinrichtung ST der Breitband-Raumkoppelfeldeinrichtung BBK direkt beeinflußt wird.

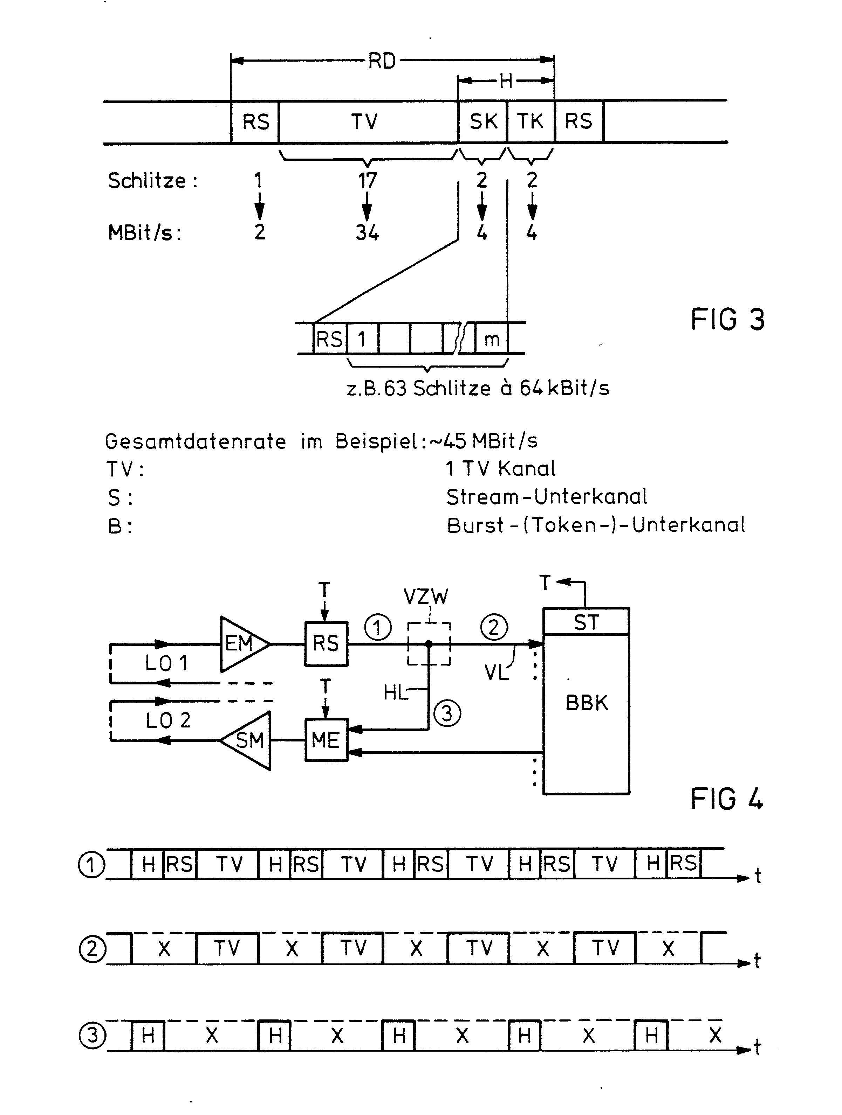

Die Teilring-Schnittstelleneinrichtungen RIU sind jeweils mit der Rahmenausgleichseinheit RS zur Rahmensychronisierung und mit der Multiplexeinrichtung ME zur Bildung der neuen Rahmen ausgestattet. Weiterhin ist ersichtlich, daß die jeweilige Teilring-Schnittstelleneinrichtung RIU sende-und empfangsseitig mit der zentral gesteuerten Breitband-Raumkoppelfeldeinrichtung BBK und sendeseitig mit einem Empfangseingang der Teilring-Schnittstelleneinrichtung RIU des jeweils nachfolgenden ringförmigen Teilnetzwerkes LO... bzw. empfangsseitig mit dem Sendeausgang der Teilring-Schnittstelleneinrichtung RIU des jeweils vorangegangenen ringförmigen Teilnetzwerkes LO... verbunden ist. Die Daten der Schmalbandteilnehmer-Endgeräte MS... werden dabei ausschließlich über die dezentralgesteuerte Ringstruktur der Teilnetzwerke LO1 bis LON übertragen, während die Daten der Breitbandteilnehmer-Endgeräte HS... aus dem jeweiligen Teilnetzwerk LO1 bis LON ausgeblendet und über einen separaten Verbindungsweg der Breitband-Raumkoppelfeldeinrichtung BBK mit dem entsprechenden Empfangseingang des Teilnetzwerkes LO1 bis LON verbunden werden, in dem das gewünschte Breitbandteilnehmer-Endgerät HS... liegt. In jedem der an die Zentraleinheit ZST angeschlossenen Teilnetzwerke LO1 bis LON sind also jeweils ein Breitbandteilnehmer-Endgerät HS... sowie mehrere Schmalbandteilnehmer-Endgeräte MS... vorgesehen. Zur gleichzeitigen Übertragung der Daten eines Bildsignals, Daten mehrerer Schmalbandteilnehmer-Endgeräte und eines - schnellen Daten-Signalisierungskanals wird auf dem Leitungssystem, das aus Lichtwellenleiter gebildet ist, eine Rahmenstruktur nach Figur 3 verwendet. Dabei besteht der gesamte Rahmen RD aus drei Unterrahmen, dem Unterrahmen TV für die Übertragung der Daten der Breitbandteilnehmer-Endgeräte, dem Unterrahmen S, dem sogennanten Stream-Unterrahmen, über den beispielsweise die Schmalbandteilnehmer-Endgeräte ihre Sprachinformationen übertragen, sowie dem Unterrahmen B (Burst-Token) zur paketförmigen Datenübertragung, beispielsweise bei Textübertragungen zwischen Bürokommunikationseinrichtungen als Schmalbandteilnehmer-Endgeräte. Die beiden zuletzt genannten Unterrahmen S und B bilden dabei zusammen den Hybrid-Kanal H. Außerdem ist im gesamten Rahmen RD das Synchronisierungsbit RS enthalten. Um bei der kombinierten Übertragung der Daten die Gesamtverzögerungszeit innerhalb des ringförmig konfigurierten Netzwerkes gering zu halten, ist die Dauer des Rahmens RD mit insgesamt 22 Bit Länge gewählt. Hierbei entfallen für das Synchronisierungsbit ein Schlitz, während für den TV-Unterrahmen 17, für den S-Unterrahmen und den B-Unterrahmen jeweils zwei Schlitze vorgesehen sind. Als Gesamtdatenrate ergibt sich somit ein Wert von 45 M Bit/s.

Die Figur 4 zeigt nochmals schematisch den Datenverlauf innerhalb des ringförmig konfigurierten Netzwerkes. So werden von einem Teilnetzwerk, beispielsweise der ersten Schleife, die Daten von dem Empfangmodul EM der Rahmenausgleichseinrichtung RS hinzugeführt, von der die Daten über die Verzweigeinrichtung VZW über die erste Verbindungsleitung VL an die Breitband-Raumkoppelfeldeinrichtung BBK und über die zweite Leitung HL an die Multiplexeinrichtung ME des nächsten Teilnetzwerkes, beispielsweise der zweiten Schleife, übertragen werden. Das darunter folgende Zeitablaufdiagramm läßt die Datenverläufe an den mit den Zahlen 1 bis 3 markierten Stellen auf der entsprechenden Leitung erkennen. So ist an der Stelle 1 das von der Rahmenausgleichseinrichtung RS empfangene Multiplexsignal mit den Daten für die Breitbandteilnehmer-Endgeräte und den Hybriddaten der Schmalbandteilnehmer-Endgeräte dargestellt. Durch die Verzweigungseinrichtung VZW werden an der Stelle 2, der ersten Verbindungsleitung VL, lediglich die Daten der Breitbandteilnehmer-Endgeräte übertragen, während an der Stelle 3, der zweiten Verbindungsleitung HL, die Hybrid-Daten der Schmalbandteilnehmer zu der Multiplexeinrichtung ME zur Bildung eines neuen Rahmens übertragen werden. Hieraus wird ersichtlich, daß die konsequente Fortführung des Aus-bzw. Einblendens von Daten zur Bildung eines Ringes führt, in dem nur die Hybrid-Unterrahmen kreisen bzw. gültige Daten enthalten. Die Teilnetzwerke LO1 bis LON werden also als autonomer dezentral gesteuerter Ring betrieben, d. h. die Schlitze für die Schmalbandteilnehmer-Endgeräte MS... werden in bekannter Weise mit Hilfe des "Token" zugeteilt, ohne daß eine zentrale Steuerung diesen Vorgang beeinflussen kann. Auch die Schmalbandteilnehmer-Endgeräte (MS...) mit - schneller Datenübertragung, beispielsweise bei Textübertragungen, bedienen sich dieses "Token", um so ihre Daten miteinander austauschen zu können.

Die Breitbandteilnehmer-Endgeräte HS... werden dagegen in herkömmlicher Weise durch die Breitband-Raumkoppelfeldeinrichtung BBK zentral vermittelt, wobei die Verbindungswünsche und unter anderem auch die Signalisierungen über den Token-Kanal des Hybridringes geleitet werden. Die Auswertung und das Zusammenspiel mit der Steuerung ST der Breitband-Raumkoppelfeldeinrichtung BBK erfolgt über die zentrale Schmalbandstation ZMS, die der Zentraleinheit ZST zugeordnet ist.

Wie bereits erwähnt, werden die Daten der einzelnen Teilnetzwerke LO1 bis LON innerhalb der Zentraleinheit ZST der Rahmenausgleichseinheit RS zugeführt, in der die Laufzeit auf ein ganzzahliges Vielfach der Gesamtrahmendauer, im Beispiel sind das 22 Bit-Zeiten, ergänzt wird. Diese Schaltmaßnahme ist durchzuführen, damit alle Rahmen der Teilnetzwerke LO1 bis LON in der Zentraleinheit ZST rahmensynchron eintreffen und die Periodizität des Rahmenumlaufes in den Teilnetzwerken LO1 bis LON gesichert ist. Außerdem wird mit der Rahmenausgleichseinheit RS das korrekte Ein-und Ausblenden der Daten der Schmalbandteilnehmer-Endgeräte HS... in die entsprechenden Unterrahmen erreicht.

Durch das in die Teilnetzwerke LO1 bis LON unterteilte ringförmig strukturierte Netzwerk ergibt sich wegen der Auskoppelvorgänge der Daten für die Breibandteilnehmer-Endgeräte HS ... im Zusammenhang mit der Durchschaltung dieser Daten über die Breitband-Raumkoppelfeldeinrichtung BBK eine Verzögerung, so daß ein Verzögerungsglied in Form eines getakteten Schieberegisters von einigen Bit Länge in die Leitung geschaltet werden muß, über die die Daten der Schmalbandteilnehmer-Endeinrichtungen MS... von einer Teilring-Schnittstelleneinrichtung RIU zur nächsten weiter gesendet werden. Das Verzögerungsglied kann in der Rahmenausgleichseinheit RS integriert sein. Da die Breitband-Raumkoppelfeldeinrichtung BBK ebenfalls taktweise durchgeschaltet wird, kann die Zeitverzögerung so gewählt werden, daß eine konstante Verzögerung auftritt.

Wird die in Figur 3 dargestellte Rahmenstruktur eingesetzt, so ergibt sich für den Stream-Unterrahmen S einschließlich der Rahmensynchronisation eine Rahmenlänge von 512 Bit (8 Bit x 64 Zeitschlitze). Um das rahmensynchrone Umlaufen dieser 64 Schmalband-Schlitzkanäle zu gewährleisten, ist in einer der Schleifenverbindungsleitungen innerhalb der Teilnetzwerke LO1 bis LON eine zusätzliche Rahmenausgleichseinheit RH vorgesehen. Diese muß eine Rahmenumlaufzeit innerhalb des Stream-Unterrahmens S sicherstellen, die ein Vielfaches der Rahmendauer RD -im Beispiel 22 Bit -beträgt. Die Rahmenausgleichseinheit RH muß also hier auf 256 x 11 = 2 816 Bit ergänzen.

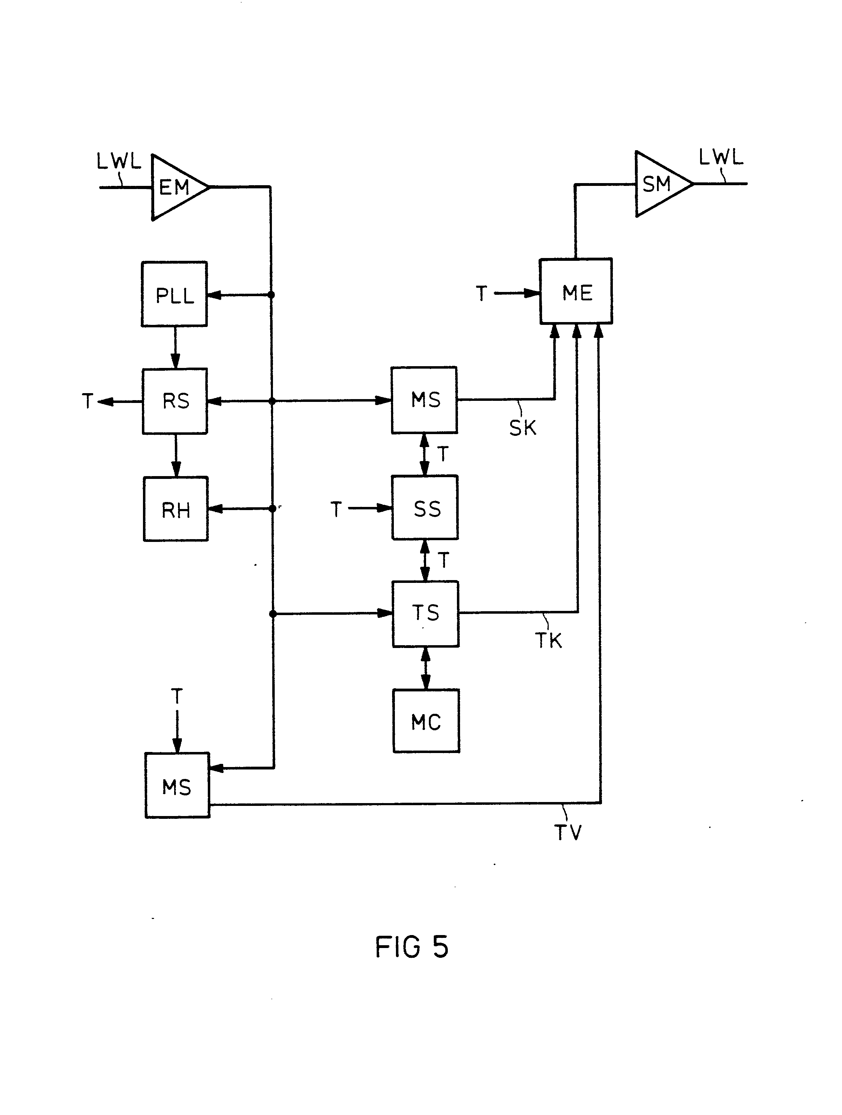

Die Figur 5 zeigt das Blockschaltbild einer Teilnehmerstation mit den Breitband-und Schmalband-Endgeräten. Nach der optischen/elektrischen Umwandlung der Daten im Empfangsmodul EM und der Taktrückgewinnung in der Schalteinrichtung PLL werden in der Rahmensynchronisiereinheit RS bzw. RH die Rahmentaktsignale T abgeleitet, die der zeitrichtigen Ein-und Ausblendung der Daten in bzw. aus den drei Unterrahmen, TV-Unterrahmen, Stream-Unterrahmen S, Burst-Unterrahmen B - (Token-Unterrahmen), dienen. Auf diese Weise werden das angeschlossene Breitbandteilnehmer-Endgerät HS, das beispielsweise ein Bildtelefon sein kann, die angeschlossenen Schmalbandteilnehmer-Endgeräte MS, im Ausführungsbeispiel ist lediglich ein Schmalbandteilnehmer-Endgerät, das beispielsweise als digitales Telefon realisiert sein kann, dargestellt und der angeschlossene Mikrocomputer MC, mit den entsprechenden Rahmentaktsignalen versorgt. Die Schlitzsteuerung SS, die für den Hybrid-Kanal zuständig ist, steuert den zeitrichtigen Zugriff zu einem der m-fach vorgesehenen - schmalbandigen Zeitkanäle und den Token-Kanal. Die Token-Steuerung TS wertet das sogenannte Token-Protokoll im Burst-Unterrahmen B aus, wo sowohl der Verbindungsaufbau als auch der Verbindungsabbau für den TV-Kanal und für alle anderen Schlitzkanäle des Stream-Unterrahmens S entsprechend gesteuert werden.

Vor Aussenden der Daten durch das Sendemodul SM werden die Ausgangsdaten aus den drei Grundbestandteilen -TV -, Stream-und Burstkanal - durch den Multiplexeinrichtung ME so zusammengesetzt, daß die drei Daten zeitrichtig verschachtelt sind.

Der Verbindungsaufbau zwischen den Schmalbandteilnehmer-Endgeräten MS... innerhalb des ringförmig strukturierten Netzwerkes wird in bekannter Weise durch das Token-Verfahren gesteuert und läuft unabhängig vom übrigen Datenaustausch im Hybrid-Unterrahmen ab, der sich als autonomer Ring darstellt.

Die Breitbandteilnehmer-Endgeräte HS... werden dagegen beim Verbindungsaufbau und Verbindungsabbau nicht dezentral gesteuert, sondern bedienen sich zunächst ebenfalls eines Token und senden dann aber im Burst-Unterrahmen die Signalisierungsdaten mit dem entsprechenden Verbindungswunsch an die zentrale Schmalbandstation ZMS (Figur 1). Die zentrale Schmalbandstation ZMD überträgt diese Informationen daraufhin an die Steuerung ST der Breitband-Raumkoppelfeldeinrichtung BBK, die anschließend den geeigneten Verbindungsweg durch das Raumkoppelfeld durchschaltet.

Der Verbindungsabbau wird in gleicher Weise vollzogen.

**Ansprüche**

1. Schaltungsanordnung für ein Kommunikationssystem zur Übertragung von bitseriellen Nachrichteninformationen, insbesondere von innerhalb optischer Übertragungssyteme übertragener Multiplexdaten, über ringförmig konfigurierte, mit entsprechenden Koppeleinrichtungen ausgestattete, lokale Netzwerke, an die eine an die unterschiedlichen Kommunikationsarten im Hinblick auf die Datenübertragungsmenge und Datenübertragungsgeschwindigkeit innerhalb eines Rahmens, sowie hinsichtlich des Übertragungsverfahrens angepaßte Anzahl von unterschiedliche Kommunikationsarten verarbeitende Endgeräte in beliebiger Kombination zueinander anschließbar sind **gekennzeichnet durch** die Kombination der Merkmale

1.1 das ringförmig konfigurierte Netzwerk ist unter Berücksichtigung der maximal über einen Rahmen innerhalb einer bestimmten Zeit zu übertagenen Datenmenge in ringförmige Teilnetzwerke (LO1 bis LON) derart unterteilt, daß innerhalb eines jeden ringförmigen Teilnetzwerkes (LO1 bis LON) mindestens ein Breitbandteilnehmer-Endgerät (HS...) und eine sich bis zur maximalen Datenmenge ergänzende Anzahl von Schmalbandteilnehmer-Endgeräten (MS...) enthalten sind,

1.2 jedes ringförmige Teilnetzwerk (LO1, LO2...LON) weist eine die Daten der Breitbandteilnehmer-Endgeräte (HS...) und die Daten der Schmalbandteilnehmer-Endgeräte (MS...) erfassende Teilring-Schnittstelleneinrichtung (RIU) auf, die sende-und empfangsseitig mit einer zentralgesteuerten Breitband-Raumkoppelfeldeinrichtung (BBK) und sendeseitig mit einem Empfangseingang der Teilring-Schnittstelleneinrichtung (RIU) des jeweils nachfolgenden ringförmigen Teilnetzwerkes (LO2...) bzw. empfangsseitig mit einem Sendeausgang der Teilring-Schnittstelleneinrichtung (RIU) des jeweils vorangegangenen ringförmigen Teilnetzwerkes (LON...) verbunden ist,

1.3 die Teilring-Schnittstelleneinrichtung (RIU) weist eine die Laufzeit im ringförmigen Teilnetzwerk (LO1, LO2... LON) auf ein ganzzahliges Vielfalch der Rahmendauer ergänzende Rahmenausgleichseinheit (RS) und eine Empfangsdaten der Breitband-Raumkoppelfeldleinrichtung (BBK) und des entsprechenden ringförmigen Teilnetzwerkes (LO1 bzw. LO2 bzw. LON) zu einem neuen vollständigen Rahmen zusammenfassende Multiplexeinrichtung (ME) auf,

1.4 in einem der ringförmigen Teilnetzwerke (LO1 bis LON) ist eine den Verbindungsauf-und -abbau zwischen den Breitbandteilnehmer-Endgeräten (HS...) über die Breitband-Raumkoppelfeldeinrichtung (BBK) steuernde zentrale Schmalbandstation (ZMS) vorgesehen.

2. Schaltungsanordnung nach Anspruch 1, **gekennzeichnet durch** das Merkmal

2.1 die Teilring-Schnittstelleneinrichtung (RIU) ist mit einer (Daten)-Verzweigungseinrichtung (VZW) (Figur 4) ausgestattet, in der die Multiplexdaten leistungsgruppenindividuell -Daten der Breitbandteilnehmer-Endgeräte (HS) zur Breitband-Raumkoppelfeldeinrichtung (BBK) und der Daten der Schmalbandteilnehmer-Endgeräte (MS) zur entsprechenden Teilring-Schnittstelleneinrichtung (RIU) -ausblendbar sind.

3. Schaltungsanlage nach Anspruch 1, **gekennzeichnet durch** die Kombination der Merkmale

3.1 der Rahmenausgleicheinheit (RS) ist eine aus Rahmensynchronisiereinrichtung, Schlitzzähleinrichtungen und Dekodierer gebildete Demultiplexeinrichtung (D) nachgeschaltet,

3.2 die Demultiplexeinrichtung (D) ist sendeseitig mit der Breitband-Raumkoppelfeldeinrichtung (BBK) über eine erste Leitung (VL) und mit der nachfolgenden bzw. der vorangegangenen Teilring-Schnittstelleneinrichtung (RIU) über eine Leitung (HL) verbunden.

FIG 1

FIG 2

Schlitze :      1      17      2      2

MBit/s :      2      34      4      4

z.B. 63 Schlitze à 64 kBit/s

FIG 3

Gesamtdatenrate im Beispiel: ~45 MBit/s
TV :                                  1 TV Kanal
S :                                   Stream-Unterkanal
B :                                   Burst-(Token-)-Unterkanal

FIG 4

FIG 5